# EUROPÄISCHE PATENTSCHRIFT

(11) **EP 1 627 854 B1**
(45) Veröffentlichungstag und Bekanntmachung des Hinweises auf die Patenterteilung: **07.05.2008**
(21) Anmeldenummer: 05017461.4
(22) Anmeldetag: 16.08.2005
(51) Int. Cl.: C02F 3/12, C02F 3/00

(54) **Verfahren zur direkten, selektiven Wahl eines gewünschten, niedrigen Schlammindex beim SBR-Verfahren**
Method for direct selection of a predetemined low sludge index in a Sequencing Batch Reactor system
Méthode de selection directe d'une indice de boue souhaitée dans une methode SBR

(30) Priorität: 20.08.2004 DE 102004040689
(43) Veröffentlichungstag der Anmeldung: 22.02.2006
(73) Patentinhaber: Holm, Niels Christian, 32425 Minden (DE)
(72) Erfinder: Holm, Niels Christian, 32425 Minden (DE)
(74) Vertreter: Tönnies, Jan G.

(56) Entgegenhaltungen:
- US-A- 4 452 699
- US-A- 5 503 748
- BELEN ARROJO ET AL.: "aerobic granulation with industrial wastewater in sequencing batch reactors" WATER RESEARCH, Bd. 38, 5. Mai 2004 (2004-05-05), XP002348500

## Beschreibung

Die Erfindung betrifft ein Verfahren zur Selektion eines Schlamms mit einem vorbestimmten, niedrigen Schlammindex bei der Abwasserbehandlung in Sequencing-Batch-Reaktoren. Die Erfindung dient also der direkten Belebtschlammselektion im Rahmen von SBR - Anlagen (SBR: Sequencing-Batch-Reaktor) mit oder ohne vorgeschalteten Pufferbehälter(n), bei dem hinsichtlich ihres Schlammindex (ISV: Maß für die Absetzgeschwindigkeit des Belebtschlammes in einem Belebungsbecken oder SB Reaktor) unterschiedliche SBR-Belebtschlamm-Teilströme aus den Reaktoren zwecks Einstellung eines gewünschten Schlammindex entnommen werden können.

Bei sehr vielen kommunalen, industriellen und gewerblichen Abwasserreinigungsanlagen sind in den letzten Jahrzehnten eine Vielzahl von speziellen Verfahrensschritten entwickelt und realisiert worden, um die Auswirkungen auf den Schlammindex gezielt untersuchen zu können, siehe z.B. [1]. In allen diesen Fällen ist es dabei das vorrangige Ziel gewesen, Prozessbedingungen zu "finden", die zu einem stabil niedrigen Schlammindex führen.

Ein stabil niedriger Schlammindex ist ökonomisch sehr vorteilhaft, da die Höhe des Schlammindexes über die Höhe der betreibbaren Belebtschlammkonzentration und/oder der hydraulischen Durchsatzkapazität entscheidet und somit der entscheidende Parameter für die Anlagengröße der Belebungs- und Nachklärbecken bzw. SB Reaktoren ist.

Dazu ein Beispiel: In einem SB Reaktor beträgt die Belebtschlammkonzentration TS_{R} = 5 g/l. Der Schlammindex beträgt ISV = 100 ml/g. Dann ist dass Schlammvolumen SV = 5 g/l x 100 ml/g = 500 ml/l. Das bedeutet, dass nach einer definierten Absetzzeit der Belebtschlamm auf das halbe Reaktorvolumen reduziert worden ist und die andere Hälfte als Klarwasserüberstand vorhanden ist. Bei einem höheren ISV z.B. 150 ml/g wäre das Schlammvolumen 5 x 150 = 750 ml/l und nur ein Viertel des Reaktorinhaltes könnte als Klarwasser entnommen werden, d.h. die hydraulische Durchsatzkapazität dieses Reaktors mit einem höheren Schlammindex wäre nur halb so groß wie des Reaktors mit dem kleineren Schlammindex

Außerdem ist ein stabil niedriger Schlammindex auch ökologisch sehr vorteilhaft, da überwiegend nur mit hohen Schlammindizes große Probleme wie Schwimm- und Blähschlammbildung verknüpft sind. Diese Schlammfraktionen mit vergleichsweise hohem Schlammindex gelangen oft unkontrolliert in die Vorfluter und verursachen dort erhebliche Gewässerverunreinigungen mit Fischsterben.

Zudem führen erhöhte Schlammabtriebe zu entsprechend erhöhten Ablaufkonzentrationen, insbesondere des abwasserabgabepflichtigen Parameters CSB (Chemischer Sauerstoffbedarf). Daraus resultieren dann höhere Abwasserabgabekosten und gegebenenfalls auch Bußgelder.

Der heutige Kenntnisstand hinsichtlich der Schlammindex beeinflussenden allgemeinen Faktoren (nach dem ATV Arbeitsblatt A 131 [2] und dem Merkblatt M 210 [3]) lässt sich wie folgt zusammenfassen:

Je nach Art der gewerblichen Einflüsse können günstige oder ungünstige Auswirkungen auf den Schlammindex auftreten. Beispielsweise wirken sich Weinbauabwässer oft ungünstig aus. Auch niedrigere Schlammalter wirken sich oft ungünstig auf den Schlammindex aus. Betriebsweisen mit stoßweiser Beschickung (nach dem "plug flow" bzw. "feast/famine" Prinzip, siehe z.B. M 210 [3]) wirken sich dagegen überwiegend positiv auf den Schlammindex aus.

Grundsätzlich gilt aber, dass selbst bei Realisierung vieler oder aller positiven Faktoren auch hohe Schlammindizes resultieren können und manchmal auch niedrige Schlammindizes unter ungünstigen Bedingungen auftreten.

Auch eine Reihe von speziellen Faktoren, wie anaerobe, anoxische und aerobe Selektoren und Zugabe unterschiedlicher Fäll- und Flockungsmittel sind in ihren Auswirkungen auf den Schlammindex untersucht worden. Manchmal wurden positive und manchmal negative Auswirkungen festgestellt. Wiederum konnte in keinem Fall generell positive Auswirkungen festgestellt werden: Was bei vielen Anlagen zu einer Verringerung des Schlammindex führte, bewirkte bei anderen Anlagen nahezu nichts und wirkte sich bei einigen sogar negativ aus.

Zu den stabilsten positiven Faktoren gehört die Realisierung des feast/famine Prinzips bei SBR Anlagen, siehe z.B. [4]. Leider gibt es allerdings auch hierfür einige großtechnische Gegenbeispiele.

Seit einigen Jahren werden Prozessbedingungen, die zur Entwicklung so genannter aerober granulärer Flocken führt, intensiv untersucht [5]. Hierbei handelt es sich um einen besonderen Typ von Belebtschlamm in SBR Anlagen mit einem extrem geringen Schlammindex von 15 - 40 ml/g.

Mittlerweile sind hierfür aus ökonomischer Sicht realisierbare Verfahrenstechniken entwickelt worden, die eine recht stabile Belebtschlammpopulation zumindest im Labormaßstab gewährleisten, siehe z.B. [6]. Die CSB-Ablaufkonzentration aus solchen Anlagen ist allerdings unakzeptabel hoch und muss mit nachfolgenden Reinigungsschritten reduziert werden. Diese zu hohen CSB-Werte treten immer bei Unterschreitung eines Schlammindex von ca. 40 ml/g auf.

Alle obigen Verfahren zielen darauf ab, Prozessbedingungen zu realisieren, die mehr oder weniger indirekt einen positiven Selektionsdruck auf schnell absetzbare Flocken ausüben. Dies gelingt deshalb oft (aber nicht immer), weil der Belebtschlamm aller Anlagen aus einem Gemisch unterschiedlich schnell absetzbarer Flocken besteht. Der gemessene Schlammindex ist daher eine Art Mittelwert über die Flockenstruktur aller Flocken eines Beckens.

Diese Rahmenbedingungen sind insofern indirekt, als dass bei allen bisher realisierten Formen der Überschussschlammentnahmen aus SBR-Reaktoren
1) entweder aus dem volldurchmischten Behälter die Entnahmen erfolgen und somit zwischen den Flockenfraktionen keinerlei Unterscheidung erfolgt oder
2) während bzw. am Ende der Sedimentationsphase die Überschussschlammentnahme im Bereich der Reaktorsohle erfolgt und somit tendenziell sogar Fraktionen mit überwiegend guten Absetzeigenschaften entnommen werden.

Die die Flockenstruktur bestimmenden Faktoren sind allerdings derart vielfältig und auch in ihrem wechselseitigen Verhalten noch weitgehend unbekannt, so dass immer wieder, auch bei Vorliegen der günstigsten Rahmenbedingungen, die Anlage "umkippt" und innerhalb kurzer Zeit ein hoher Schlammindex entsteht.

Arrojo et al. offenbart ein typisches Verfahren aus dem Stand der Technik (Arrojo et al., 2004, Aerobic granulation with industrial wastewater in sequencing batch reactors, Wat. Res. 38, 3389-3399).

Aufgabe dieser Erfindung ist es deshalb, ein Verfahren bereit zu stellen, bei dem die im Belebtschlamm befindlichen Flocken mit guten Absetzeigenschaften direkt positiv selektioniert werden, auch ohne dass gute indirekte Rahmenbedingungen, wie oben beschrieben, vorhanden sind.

Die Erfindung wird gelöst durch ein Verfahren zur Selektion eines Belebtschlamms mit einem vorbestimmten, niedrigen Schlammindex bei der Abwasserbehandlung in Sequencing-Batch-Reaktoren, mit den Schritten: a) Einleiten von Abwasser in einen Sequencing-Batch-Reaktor, b) Absetzenlassen des Belebtschlamms, c) Entnehmen der sich absetzenden und/oder abgesetzten, oberen Schlammfraktion mit hohem Schlammindex als Überschussschlamm, d) Bestimmen des Schlammindex des verbleibenden Schlamms und e) Wiederholen der Schritte b) bis d) bis der vorbestimmte, niedrige Schlammindex erreicht ist.

Diese erfindungsgemäße Lösung wird beim SBR Verfahren wie folgt realisiert:

Schon kurz nach Beginn der Absetzphase, allerdings frühestens nachdem sich ein erkennbarer Schlammspiegel unterhalb der Wasseroberfläche ausgebildet hat (ca. 10 - 60 min nach Beginn der Absetzphase), wird ein Teil dieser oberen Schlammfraktion (die im Mittel über einen höheren Schlammindex verfügt als die untere Fraktion) dem Reaktor mittels Pumpen oder E-Schieber-Abgängen entnommen. Die entnommene Menge entspricht dabei maximal der sowieso zu entfernenden Überschussschlammmenge.

Im Rahmen einer technisch einfachen Ausgestaltung der Erfindung wird in einer Höhe zwischen 30 und 70 % des jeweiligen Abwasserfüllstandes oder zwischen 2,0 und 0,5 m unterhalb des jeweiligen minimalen Füllstandes Schlamm entnommen. Dafür wird in der genannten Höhe eine Tauchmotorpumpe platziert oder ein geregelter E-Schieber Freigefälleabgang oder ein Abgang aus dem abgesaugt wird, realisiert.

Aus genau dieser Höhe wird dann bedarfsgerecht der Überschussschlamm entnommen, z.B. zeitgesteuert eingestellt so dass der Abzug im Mittel dann erfolgt, wenn die entsprechende Schlammfraktion bis dorthin sedimentiert ist.

Technisch etwas aufwendiger wird diese Variante unter Einbeziehung einer Schlammspiegelmessung realisiert: Erst wenn diese eine Schlammspiegelhöhe meldet, die sich in einer definierten Höhe oberhalb der festen Entnahmestelle befindet, erfolgt die Freigabe für die Entnahme, die dann eine feste eingestellte Zeitlang erfolgt. Diese Zeit kann ab Unterschreitung einer zweiten Schlammspiegelhöhe begrenzt werden.

Im Rahmen einer zweiten technisch aufwendigeren Ausgestaltungsvariante der Erfindung wird wiederum in einer Höhe ca. 0,5 m unterhalb der minimalen Füllhöhe eine Tauchmotorpumpe platziert. Diese ist allerdings über flexible Schlauchverbindungen und elektromechanisch automatisierbar oder manuell (z.B. mittels automatischen Winden) in ihrer vertikalen Höhe verfahrbar.

Im Rahmen der manuellen Variante würde basierend auf den möglichen Füllhöhen im Reaktor und auf den aktuellen Schlammindizes, Schlammvolumina und Absetzzeiten die optimale Platzierungshöhe für die Tauchmotorpumpe manuell eingestellt werden oder über eine fest eingestellte Zeitabfolge zieht die Pumpe zu unterschiedlichen Zeiten aus unterschiedlichen Höhen ab.

Im Rahmen einer weiteren automatischen Variante wird die vertikale Verfahrung und Entnahme erfolgen auf Basis der aktuellen Schlammspiegelhöhen.

Das gleiche Ziel kann vollautomatisch auf Basis mehrerer Abzugshöhen vertikal untereinander (sowohl E-Schieber geregelt als auch mittels Absaugung) umgesetzt werden. Entweder werden dann wiederum auf Basis der aktuellen Schlammspiegelhöhen zu unterschiedlichen Zeiten aus unterschiedlichen Höhen entnommen. Ohne Schlammspiegelmessung wird dann über eine fest eingestellte Zeitabfolge zu unterschiedlichen Zeiten aus unterschiedlichen Höhen abgezogen.

Alle oben aufgeführten Selektionsstrategien werden den Schlammindex mehr oder weniger stark reduzieren. Eine Reduktion unterhalb von ca. ISV = 50 ml/g kann jedoch kontraproduktiv sein, da dann unter Umständen die CSB-Konzentration im Ablauf ansteigt.

Um diese Entwicklung nach Erreichen des gewünschten Schlammindexes zu beenden, muss gewährleistet sein, dass keine weitere Selektion in Richtung eines noch niedrigeren Schlammindexes erfolgt. Daher sind die oben aufgeführten Selektionsstrategien so auszuführen, dass auch bei Bedarf der mittlere Schlammindex entnommen werden kann oder sogar die Belebtschlammfraktion mit dem geringen Schlammindex.

Daher muss entweder
1) aus dem volldurchmischten Reaktor der mittlere Schlammindex entnommen werden können und/oder
2) es muss nach Beginn der Sedimentationsphase von der Reaktorsohle der Belebtschlamm entnommen werden können.

1) ist realisierbar mit allen oben aufgeführten Ausführungsvarianten. 2) ist realisierbar mit den obigen Ausführungsvarianten, wonach auch im Bereich der Beckensohle entnommen werden kann. Bezogen auf die anderen Varianten müssen diese um eine zusätzliche Entnahmemöglichkeit im Bereich der Reaktorsohle ergänzt werden.

Mit den oben aufgeführten Selektionsstrategien inklusive der Möglichkeit auch gegenzusteuern kann jede SBR Anlage sehr weitgehend genau auf jeden beliebig gewünschten Schlammindex eingestellt werden. Selbstverständlich wird diese Einstellung schneller erfolgen, wenn die positiven indirekten Rahmenbedingungen auch vorliegen, aber ihre Bedeutung ist wesentlich geringer als bei Anlagen ohne direkter Selektion von Schlammflocken mit im Mittel höherer Absetzgeschwindigkeit.

Die Folgen für die Planung neuer Anlagen sind eindeutig: Der Schlammindex muss nicht mehr anhand von sehr groben statistischen Erfahrungswerten "bemessen", d.h. abgeschätzt werden, mit den großen Sicherheitszuschlägen, die dann erforderlich sind. Bei Implementierung dieser Erfindung kann der Schlammindex mit großen Sicherheiten nahezu frei "gewählt" werden, d.h. es wird dann ein relativ geringer Schlammindex gewählt mit der Folge von enormen Volumen- und somit Kosteneinsparungen.

Auf vorhandenen Anlagen kann die Erfindung sehr einfach und kostengünstig nachgerüstet werden. Sehr viele ansonsten erforderliche Nachrüstungsmaßnahmen, insbesondere Volumenerweiterungen, werden dann nicht mehr realisiert werden müssen.

Auch die Auswirkungen auf die Schlammbehandlung sind enorm. Mit einem Schlammindex von ca. 45 ml/g ist nach vergleichsweise kurzer statischer Eindickung ein End-TS-Gehalt von 5 - 6 % erreichbar. Damit entfällt die Erfordernis einer maschinellen Eindickung auf diesen TS-Gehalt. Mit einem ISV = 50 ml/g können nahezu alle vorhanden SBR Reaktoren mit viel höheren Belebtschlammkonzentrationen betrieben werden als bisher.

### Beispiel:

### Gewählte Abmessungen eines SBR- Reaktors:

| | | |
|---|---|---|
| Durchmesser: | 21,00 m | |
| Wasserspiegel max: | 5,50 m | |
| Wasserspiegel min: | 3,47 m | (bei f_{A,max} = 702 m³) |
| Höhe: | 6,00 m | |
| Vol_{SBR}: | 1.905 m³ | |

Somit ist ein maximales Austauschvolumen gewählt worden von: V_{A} = 702/1.905 = 0,37 Es wird eine Belebtschlammkonzentration von TS_{R} = 9 g/l gewählt.

### Nachweis gemäß ATV SBR-Merkblatt 210:

| | | |
|---|---|---|
| TS_{R} = 9 g/l | ISV = 50 ml/g | H_{R} = 5,50 m |

Für die Höhe des Schlammspiegels Hₛ nach Beendigung des Absetzvorganges (Gleichung 17 M 210) gilt: Hₛ = H_{R} (TS_{R} · ISV) 1.000 = 2,48 m

Mit vs = 650/(TS_{R} · ISV) = 1,44 m/h beträgt die Höhe des Schlammspiegels nach 2h (10 min vorher werden die Rührwerke ausgestellt): 2,61 m.

Somit ist ein ausreichender Abstand von 0,86 m vom Schlammspiegel zum Wasserspiegel min von 3,47 m gegeben (gemäß M 210 ist 0,1 5,5 = 0,55 m erforderlich).

Nach diesem Beispiel mit einem mittleren Austauschvolumen von 37 % kann die SBR Anlage somit mit einer Belebtschlammkonzentration von über 9 g/l betrieben werden. Damit ist hinsichtlich der Belebtschlammkonzentration nahezu eine Gleichwertigkeit mit Membranbelebungsanlagen gegeben, ohne dass Membranen erforderlich sind.

### Literatur

[1] Irvine, R.L., Ketchum, Jr.,L.H.: Sequencing Batch Reactor for Biological Wastewater Treatment. CRC Crit. Rev. Environ. Control, 1988, 18, 255
[2] ATV - A 131:
   Bemessung von einstufigen Belebungsanlagen ab 5.000 Einwohnerwerten.
   GFA, St.Augustin, Mai 2000
[3] ATV - M 210:
   Belebungsanlagen mit Aufstaubetrieb.
   Gesellschaft zur Förderung der Abwassertechnik e.V. (GFA), Hennef, 1997
[4] McSwain, B.S., Irvine, R.L., Wilderer, P.A.: The effect of intermittent feeding on aerobic granular structure. Water Science and Technology, Vol. 49, No. 11-12, 2004 19ff
[5] de Bruin, L.M.M., de Kreuk, M.K., van der Roest, H.F.R., Uijterlinde, C., van Loosdrecht, M.C.M.: Aerobic granular sludge technology; alternative for activated sludge? Water Science and Technology, Vol. 49, No. 11-12,2004 1ff
[6] Etterer, T., Wilderer, P.A.: Generation and properties of aerobic granular sludge. Water Science and Technology, Vol. 43, No. 3, 2001 19ff

## Patentansprüche

1. Verfahren zur Selektion eines Belebtschlamms mit einem vorbestimmten, niedrigen Schlammindex bei der Abwasserbehandlung in Sequencing-Batch-Reaktoren,
**gekennzeichnet durch**
a) Einleiten von Abwasser in einen Sequencing-Batch-Reaktor,
b) Absetzenlassen des Belebtschlamms,
c) Entnehmen der sich absetzenden und/oder abgesetzten, oberen Schlammfraktion mit hohem Schlammindex als Überschussschlamm,
d) Bestimmen des Schlammindex des verbleibenden Schlamms und
e) Wiederholen der Schritte b) bis d) bis der vorbestimmte, niedrige Schlammindex erreicht ist.

2. Verfahren nach Anspruch 1, **dadurch gekennzeichnet, dass** das Absetzenlassen für einen Zeitraum von 10 bis 150 Minuten erfolgt.

3. Verfahren nach Anspruch 1, **dadurch gekennzeichnet, dass** die Entnahme der oberen Schlammfraktion mittels einer Pumpe oder wenigstens eines E-Schieber-geregelten Abgangs erfolgt.

4. Verfahren nach einem der vorhergehenden Ansprüche, **dadurch gekennzeichnet, dass** die obere Schlammfraktion in einer Höhe zwischen 30 und 70 % des jeweiligen Abwasserfüllstandes entnommen wird.

5. Verfahren nach einem der vorhergehenden Ansprüche, **dadurch gekennzeichnet, dass** die obere Schlammfraktion auf einer Höhe zwischen 2,0 und 0,5 m unterhalb des jeweiligen minimalen Füllstandes des Sequencing-Batch-Reaktors entnommen wird.

6. Verfahren nach einem der vorhergehenden Ansprüche, **dadurch gekennzeichnet, dass** die Pumpe zur Entnahme der oberen Schlammfraktion höhenverstellbar ist.

7. Verfahren nach einem der vorhergehenden Ansprüche, dass die obere Schlammfraktion mit hohem Schlammindex bei Erreichen einer definierten Schlammspiegelhöhe oberhalb der Entnahmestelle entnommen wird.

8. Verfahren nach einem der vorhergehenden Ansprüche, **dadurch gekennzeichnet, dass** bei Unterschreiten eines vorbestimmten, niedrigen Schlammindex, aus der Reaktorsohle Schlamm mit einem niedrigen Schlammindex entnommen wird, damit der Schlammindex des verbleibenden Schlamms im Mittel auf den vorbestimmten Schlammindex ansteigt.

9. Verfahren nach einem der vorhergehenden Ansprüche, **dadurch gekennzeichnet, dass** bei Unterschreiten eines vorbestimmten, niedrigen Schlammindex, der Reaktor vollständig durchmischt und Schlamm mit einem mittleren Schlammindex entnommen wird.

## Claims

1. Selection process for an activated sludge with a specified low sludge index for wastewater treatment in Sequencing Batch Reactors,
**characterised in that**
a) a Sequencing Batch Reactor is filled with wastewater,
b) the activated sludge is allowed to settle,
c) the settling and/or settled upper fraction of the sludge with a high sludge index is removed as surplus sludge,
d) the sludge index of the remaining sludge is determined, and
e) operations b) to d) are repeated until the specified low sludge index is achieved.

2. Process according to Claim 1, **characterised in that** the time allowed for settling is between 10 and 150 minutes.

3. Process according to Claim 1, **characterised in that** the upper sludge fraction is removed by a pump or by a minimum of one outlet controlled by an electrovalve.

4. Process according to one of the above Claims, **characterised in that** the upper sludge fraction is removed at a height between 30% and 70% of the respective wastewater level.

5. Process according to one of the above Claims, **characterised in that** the upper sludge fraction is removed at a height between 2.0m and 0.5m below the respective minimum filled level of the Sequencing Batch Reactor.

6. Process according to one of the above Claims, **characterised in that** the pump used to remove the upper sludge fraction is adjustable in height.

7. Process according to one of the above Claims, **characterised in that** the upper sludge fraction with a high sludge index is removed on reaching a specific sludge level above the removal point.

8. Process according to one of the above Claims, **characterised in that** when the value falls below a specified low sludge index, sludge with a low sludge index is removed from the bottom of the reactor, so that the sludge index of the remaining sludge in the centre increases to the specified sludge index.

9. Process according to one of the above Claims, **characterised in that** when the value falls below a specified low sludge index, the reactor is fully mixed through and sludge with an average sludge index is removed.

## Revendications

1. Procédé de sélection d'une boue activée ayant un bas indice de boue prédéfini lors du traitement d'eaux usées dans des réacteurs biologiques séquentiels,
**caractérisé par**
a) introduire des eaux usées dans un réacteur biologique séquentiel,
b) laisser se déposer la boue activée,
c) prélever en tant que boue excédentaire la fraction de boue supérieure ayant un indice de boue élevé qui se dépose et/ou qui s'est déposée,
d) déterminer l'indice de boue de la boue restante, et
e) répéter les étapes b) à d) jusqu'à ce que le bas indice de boue prédéfini soit atteint.

2. Procédé selon la revendication 1, **caractérisé en ce qu'**on laisse la boue se déposer pendant une durée de 10 à 150 minutes.

3. Procédé selon la revendication 1, **caractérisé en ce que** le prélèvement de la fraction de boue supérieure s'effectue au moyen d'une pompe ou d'au moins une sortie régulée par tiroir à commande électrique.

4. Procédé selon l'une des revendications précédentes, **caractérisé en ce que** la fraction de boue supérieure est prélevée à une hauteur comprise entre 30 et 70% du niveau respectif d'eaux usées.

5. Procédé selon l'une des revendications précédentes, **caractérisé en ce que** la fraction de boue supérieure est prélevée à une hauteur comprise entre 2,0 et 0,5 m en dessous du niveau de remplissage minimal respectif du réacteur biologique séquentiel.

6. Procédé selon l'une des revendications précédentes, **caractérisé en ce que** la pompe destinée à prélever la fraction de boue supérieure est réglable en hauteur.

7. Procédé selon l'une des revendications précédentes, **caractérisé en ce que** la fraction de boue supérieure ayant un indice de boue élevé est prélevée à l'atteinte d'une hauteur de boue définie au-dessus du point de prélèvement.

8. Procédé selon l'une des revendications précédentes, **caractérisé en ce qu'**en cas de sous-dépassement d'un bas indice de boue prédéfini, on prélève de la base du réacteur de la boue ayant un bas indice de boue, afin que l'indice de boue de la boue restante s'élève en moyenne à l'indice de boue prédéfini.

9. Procédé selon l'une des revendications précédentes, **caractérisé en ce qu'**en cas de sous-dépassement d'un bas indice de boue prédéfini, on brasse à fond le réacteur et on prélève de la boue ayant un indice de boue moyen.
